(19) Europäisches Patentamt
European Patent Office
Office européen des brevets

(11) **EP 4 246 384 A1**

(12) **EUROPEAN PATENT APPLICATION**

(43) Date of publication:
**20.09.2023  Bulletin 2023/38**

(51) International Patent Classification (IPC):
**G06N 10/60** (2022.01)     **G06N 10/20** (2022.01)

(21) Application number: **22161856.4**

(52) Cooperative Patent Classification (CPC):
**G06N 10/60; G06N 10/20**

(22) Date of filing: **14.03.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **IQM Finland Oy
02150 Espoo (FI)**

(72) Inventors:
• **PINA CANELLES, Vicente
Munich (DE)**

• **AUER, Adrian
Munich (DE)**
• **DE VEGA, Inés
Munich (DE)**
• **LEIB, Martin
Munich (DE)**

(74) Representative: **Berggren Oy
P.O. Box 16
Eteläinen Rautatiekatu 10A
00101 Helsinki (FI)**

(54) **QUANTUM PROCESSING UNIT**

(57)     The invention relates to the field of quantum computing. The invention relates to quantum processing units with specific topologies that are adapted to perform a quantum Fourier transform. A first topology includes a plurality of central qubits that are each directly connected to a first qubit and second qubit. A second topology includes a plurality of qubits arranged in a four-degree chain. The inventions also includes methods of performing quantum Fourier transforms on both topologies.

*FIG. 4*

**Description**

**Technical Field**

The invention relates to the field of quantum computing and more specifically to a quantum processing unit.

**Background**

In the current noisy intermediate-scale quantum (NISQ) era, quantum processors are not sufficiently robust against noise sources to handle algorithms with arbitrary depth, therefore limiting the depth of algorithms that can be effectively implemented. Furthermore, certain gates, such as SWAP gates, are extremely expensive in terms of quantum resources since they may not be native and must be decomposed into other native entangling gates.

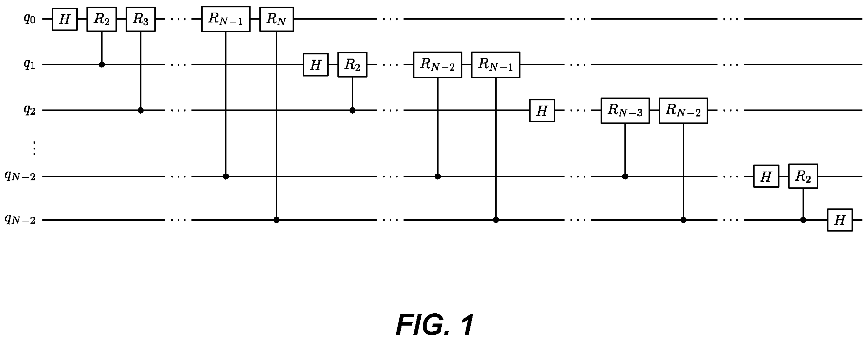

The quantum Fourier transform is an important quantum algorithm that is used in many other quantum algorithms such as quantum phase estimation, the quantum algorithm for solving linear systems of equations and Shor's factorization algorithm. A quantum circuit diagram for the quantum Fourier transform is shown in Figure 1.

**Summary of the Invention**

A first aspect of the invention relates to a quantum processing unit for performing a quantum Fourier transform. The quantum processing unit comprises a first qubit, $q_0$, a second qubit, $q_1$, connected directly to the first qubit, and a plurality of central qubits, $q_2$ to $q_{N-1}$, where $N$ is the total number of qubits including the first qubit and the second qubit and the plurality of central qubits, each central qubit being connected directly to the first qubit and to the second qubit.

The first qubit, second qubit and plurality of central qubits are logical qubits that each comprise one or more physical qubits.

A second aspect of the invention relates to a method for performing a quantum Fourier transform on the quantum processing unit of the first aspect. The method comprises:

a) initializing the qubit states of the first qubit $q_0$, second qubit $q_1$ and central qubits $q_2$ ... $q_{N-1}$;
b) performing the following for every value of n in the sequence 1,2,..., [(N - 1)/2J:

- performing a two-qubit gate (TQG) on the qubit pair [$q_0,q_1$],
- performing a first sequence of TQGs acting on qubit pairs [$q_0,q_{2n}$], [$q_0,q_{2n+1}$], ..., [$q_0,q_{N-1}$] and a second sequence of TQGs acting on qubit pairs [$q_1,q_{2n}$], [$q_1,q_{2n+2}$], ..., [$q_1,q_{N-1}$]; and
- performing swap gates on qubit pairs [$q_0,q_{2n}$] and [$q_1,q_{2n+1}$];

c) If $N$ is even, performing a TQG on the qubit pair [$q_{N-2},q_{N-1}$].

The first sequence of TQGs and a second sequence of TQGs may be performed such that after performing a TQG on the qubit pair [$q_0, q_{2n}$] in the first sequence, the remaining TQGs of the first sequence are performed in parallel with TQGs of the second sequence such that the TQG on qubit pair [$q_0,q_k$] is performed in parallel with the TQG on qubit pair [$q_1,q_{k-1}$].

After performing the remaining TQGs of the first sequence in parallel with TQGs of the second sequence, the final TQG in the second sequence, which operates on qubit pair [$q_1,q_{N-1}$], may be performed.

Performing TQGs may comprise applying control signals to the qubits and/or to the connections between the qubits.

A third aspect of the invention relates to a quantum processing unit for performing a quantum Fourier transform. The quantum processing unit comprises $N$ qubits $q_0$ to $q_{N-1}$, wherein the qubits are arranged in a four-degree chain such that all qubits $q_k$ except for the first qubit $q_0$, second qubit $q_1$, penultimate qubit $q_{N-2}$ and final qubit $q_{N-1}$ are connected to four other qubits $q_{k-2}$, $q_{k-1}$, $q_{k+1}$ and $q_{k+2}$.

The quantum processing unit may comprises at least five qubits.

The first qubit $q_0$ may be connected to qubits $q_1$ and $q_2$, the second qubit $q_1$ may be connected to qubits $q_0$, $q_2$ and $q_3$, the penultimate qubit $q_{N-2}$ may be connected to qubits $q_{N-4}$, $q_{N-3}$ and $q_{N-1}$, and the final qubit $q_{N-1}$ may be connected to qubits $q_{N-3}$ and $q_{N-2}$.

The qubits $q_0$ to $q_{N-1}$ may be logical qubits that each comprise one or more physical qubits.

A fourth aspect of the invention relates to a method for performing a quantum Fourier transform on the quantum processing unit of any of third aspect. The method comprises:

a) initializing the qubit states of the first qubits $q_0$ to $q_{N-1}$;

b) performing the following for every value of n in the sequence 1,2,..., [(*N* - 1)/2]:

- performing all TQGs that can be performed on the qubits $q_0$ to $q_{N-1}$ based on the current positions of the qubit states within the qubits $q_0$ to $q_{N-1}$ and the connections available between the qubits, and based on the order in which TQGs must be performed in a quantum Fourier transform;
- if n is even, performing SWAP gates between all pairs of qubits [$q_c$, $q_{c+2}$], where c is even, c/2 is even and c/2 ≤ n; and
- if n is odd, performing SWAP gates between all pairs of qubits [$q_d$,$q_{d+2}$], where d is odd, (d + 1)/2 is even, and (d + 1)/2 ≤ n;

c) repeating b) until all TQGs required for the quantum Fourier transform have been performed.

Once all TQGs required for the quantum Fourier transform have been performed, the method may further comprise applying a plurality of SWAP gates to the qubits $q_0$ to $q_N$ corresponding to SWAP gates applied during the process of applying the TQGs in inverse order.

Performing TQGs may comprise applying control signals to the qubits and/or to the connections between the qubits.

The order in which TQGs must be performed in a quantum Fourier transform may comprise a sequence of groups of one or more TQGs that can be performed in parallel, and wherein performing all TQGs that can be performed may comprise performing all groups of one or more TQGs from the sequence that can be fully performed based on the current positions of the qubit states within the qubits.

A fifth aspect of the invention relates to a computer system configured to perform any of the methods described above.

A sixth aspect of the invention relates to a computer system comprising a classical processing unit and a quantum processing unit, the classical processing unit being configured to provide control signals to the quantum processing unit such that the quantum processing unit performs any of the methods described above.

A seventh aspect of the invention relates to a quantum processing unit configured to perform the methods described above.

An eight aspect of the invention relates to a computer program product comprising instructions which, when executed by a computer, cause the computer to perform the any of methods described above.

A ninth aspect of the invention relates to a computer-readable medium comprising instructions which, when executed by a computer, cause the computer to perform any of the methods described above.

**Brief Description of the Drawings**

Figure 1   A quantum circuit diagram showing a quantum circuit for performing a quantum Fourier transform on a quantum processing until with all-to-all topology.

Figure 2   A quantum circuit diagram showing the arrangement of two-qubit gates of a quantum Fourier transform performed on a quantum processing unit with all-to-all topology.

Figure 3   A quantum circuit diagram showing the arrangement of two-qubit gates for a quantum Fourier transform performed on a quantum processing unit with qubits arranged in a two-degree chain.

Figure 4   A quantum processing unit according to the present invention including a plurality of central qubits, all of which are directly connected to first and second qubits.

Figure 5   A quantum circuit diagram showing the arrangement of two-qubit gates of a quantum Fourier transform performed according to the present invention on the quantum processing unit of Figure 4.

Figure 6   A flow chart depicting the method of performing a quantum Fourier transform on the quantum processing unit of Figure 4.

Figure 7   A quantum processing unit according to the present invention including a plurality of qubits arranged in a four-degree chain.

Figure 8   A quantum circuit diagram showing the arrangement of two-qubit gates for a quantum Fourier transform performed according to the present invention on the quantum processing unit of Figure 7.

Figure 9   A flow chart depicting the method of performing a quantum Fourier transform on the quantum processing unit of Figure 7.

**Detailed Description of the Invention**

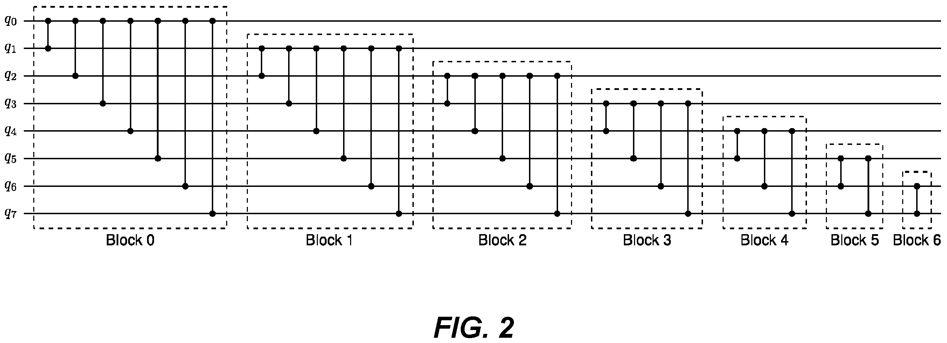

Figure 1 shows a quantum circuit diagram for an idealised quantum Fourier transform on five qubits with all-to-all (ATA) direct connectivity, i.e. every qubit is directly connected to every other qubit. Figure 2 shows a quantum circuit diagram which depicts the arrangement of two-qubit gates (TQGs) for a quantum Fourier transform performed on a quantum processing unit with ATA connectivity. For brevity, the single-qubit Hadamard gates and the TQG labels have been omitted, although the pattern of gates is clear from Figure 1. The TQGs of Figure 2 can be logically arranged into blocks 0 to 6 based on the qubit number $q_0$ to $q_6$ of the qubit common to all TQGs in the block.

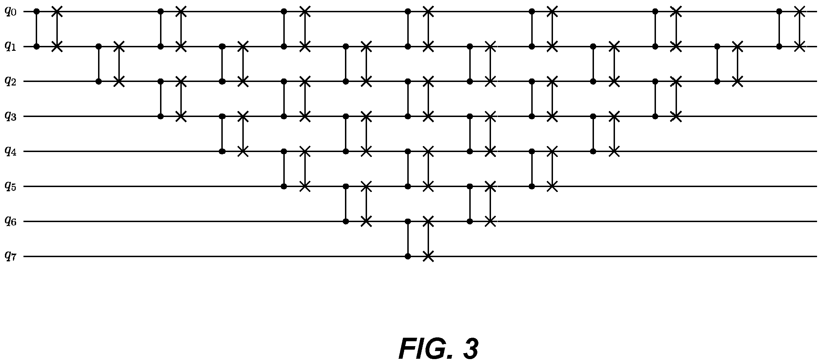

Practically, this kind of ATA direct connectivity is impractical with current superconducting qubit manufacturing techniques, which typically require that the qubits be arranged in a planar graph. As a result, the circuits shown in Figure 1 and Figure 2 must be transpiled, i.e. reformulated to function on the specific hardware that is available. This typically involves introducing a number of SWAP gates in order to "move" quantum states between qubits into ones that are suitably connected to allow the correct TQGs to be performed. Introducing SWAP gates, however, significantly increases circuit depth and error, not least because each SWAP gate consists of multiple native gates for current physical qubit implementations. An example of a transpiled quantum circuit for performing a quantum Fourier transform on a two-degree linear chain, i.e. a chain of qubits in which each qubit except for the first and last qubit is connected to two others, is shown in Figure 3.

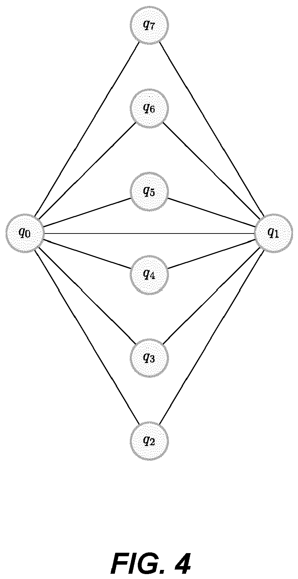

Figure 4 shows the layout of qubits in a quantum processing unit specifically designed for carrying out a quantum Fourier transform. The quantum processing unit has a number of central qubits $q_2$ to $q_7$ that are all directly connected to both a first qubit $q_0$ and second qubit $q_1$. Figure 4 shows six central qubits $q_2$ to $q_7$, but the number of qubits in the QPU can be arbitrarily increased or decreased by changing the number of central qubits, which are all connected to both the first qubit and second qubit. The first qubit $q_0$ and second qubit $q_1$ are also directly connected.

While the qubits $q_2$ to $q_7$, and more generally qubits $q_2$ to $q_{N-1}$, have been referred to as "central" qubits, this should not be considered to be a requirement of the qubits' physical location, only their logical position as being connected to both the first qubit $q_0$ and second qubit $q_1$. The qubits $q_0$ to $q_{N-1}$ may be arranged in any physical orientation that meets the requirement imposed by the particular type of qubits and the way they are manufactured, for example requiring that the qubits are arranged in a planar graph and that connections between the qubits are sufficiently short to allow coupling and interaction of the qubits.

Coupling large numbers of physical qubits in a quantum processing unit is technically challenging as the direct coupling of one qubit to many requires increasing capacitance or inductance, resulting in larger qubit sizes. Such constraints limits both the number of qubits that can be coupled and the number of qubits that can be formed on a single die or wafer. Furthermore, as larger numbers of qubits are coupled in a single system, frequency crowding prevents single qubits from being reliably individually addressed. The qubits shown in Figure 4 may therefore be logical qubits, which are each made up of one or more physical qubits or qubit-like elements, such as a resonator, that are capable of storing a quantum state. Where a logical qubit is made up of more than one physical qubit or qubit-like elements, there exist connections between the physical qubits or qubit like elements within the logical qubit, and the connections between the logical qubit and other logical or physical qubits are distributed between the physical qubits or qubit like elements of the logical qubit. Thus, where a large number of central qubits are employed, it may be necessary to use multiple physical qubits or qubit-like elements as part of logical first and second qubits. Throughout this disclosure, where the term "qubit" is used, it should be considered to encompass both physical and logical qubits, as well as qubit-like elements such as resonators.

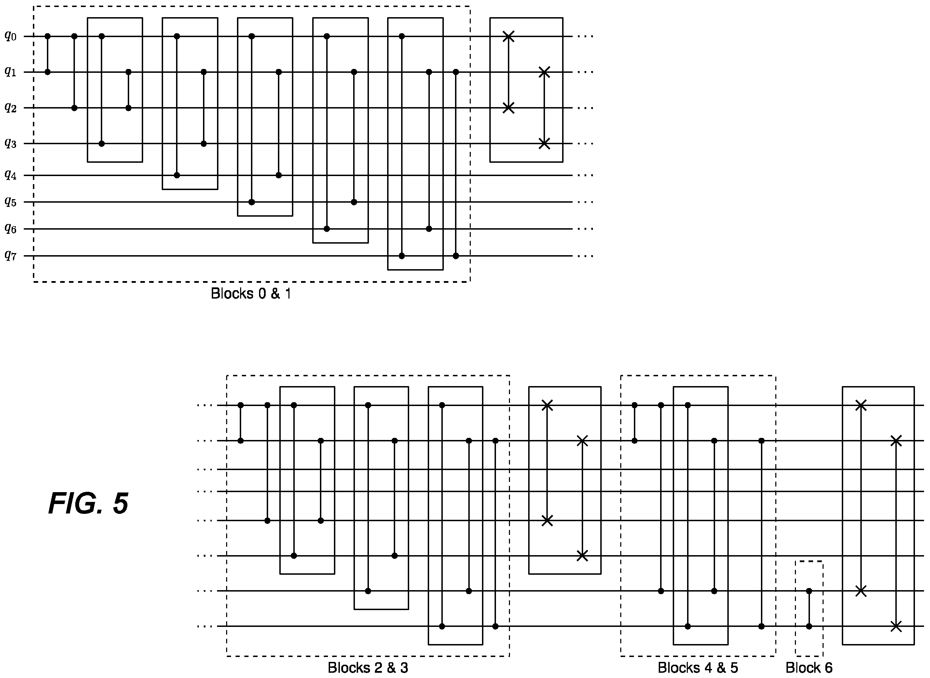

Figure 5 is a quantum circuit diagram showing the arrangement of TQGs of a quantum Fourier transform performed on the quantum processing unit of Figure 4. TQGs are indicated by connections between quantum wires for qubits $q_0$ to $q_7$. TQGs surrounded by a box with a solid border can be performed in parallel. In conventional quantum circuit diagrams a connection with a quantum wire indicated with a filled circle typically denotes a control connection, but in the diagram of Figure 4 no such meaning is intended. The filled circle is merely used to indicate which quantum wires the TQGs interact with. Boxes with a dashed border indicate logical arrangements of the qubits where operations equivalent to blocks 0 to 6 shown in Figure 2 are performed.

A generalized method for performing a quantum Fourier transform on a QPU with any number of qubits $q_0$ to $q_{N-1}$ with a topology consistent with that shown in Figure 4 can be expressed as follows:

a) initializing the qubit states of the first qubit $q_0$, second qubit $q_1$ and central qubits $q_2 ... q_{N-1}$;
b) performing the following steps for every value of n in the sequence 1,2,..., $\lfloor (N - 1)/2 \rfloor$:

i. performing a TQG on the qubit pair $[q_0, q_1]$;
ii. performing a first sequence of TQGs acting on qubit pairs $[q_0, q_{2n}]$, $[q_0, q_{2n+1}]$, ..., $[q_0, q_{N-1}]$ and a second sequence of TQGs acting on qubit pairs $[q_1, q_{2n}]$, $[q_1, q_{2n+1}]$, ..., $[q_1, q_{N-1}]$; and
iii. performing swap gates on qubit pairs $[q_0, q_{2n+1}]$ and $[q_1, q_{2n+2}]$;

c) If $N$ is even, performing a TQG on the qubit pair $[q_{N-2}, q_{N-1}]$.

Due to the independent connections of the central qubits $q_2$ to $q_{N-1}$ with both the first qubit $q_0$ and second qubit $q_1$, pairs of blocks shown in Figure 2 can be performed partially in parallel. In other words, step b. ii. of performing the first and second sequences of TQGs may be performed such that, after performing a TQG on the qubit pair $[q_0, q_{2n}]$ in the first sequence, the remaining TQGs of the first sequence are performed in parallel with the TQGs of the second sequence, such that the TQG on qubit pair $[q_0, q_k]$ is performed in parallel with the TQG on qubit pair $[q_1, q_{k-1}]$. As a result, for each pair of blocks, all but the final TQG of the latter block in pair can be performed in parallel with the TQGs of the former block in the pair. It is not essential to perform the pairs of TQGs surrounded by solid-bordered boxes in parallel but doing so enables the sequence of TQGs to be performed in less time, which is advantageous given the limited coherence times of current physical realizations of qubits.

The term $[(N - 1)/2]$ indicates a floor operation on the number $(N - 1)/2$, which is not an integer if $N$ is even. The floor operation is equivalent to performing integer division of $N - 1$ by 2 and discarding the remainder.

Nevertheless, whether or not the TQGs are not performed in parallel, it can be seen from Figure 5 and the method described above that the number of SWAPs required to perform the quantum Fourier transform on a QPU with qubit topology according to Figure 4 is significantly lower than the number of SWAPs required for a two-dimensional chain, as shown in Figure 3. For the topology of Figure 4, the number of SWAPS required scales linearly with the number of qubits. This contrasts with the two-degree chain, where the number of SWAPs required scales quadratically with the number of qubits.

Optionally, the method includes a further step d. of performing the SWAP gates performed in step b. in reverse to re-order the quantum states in the qubits to correspond to the original qubits. However, such a step is not strictly necessary since the ordering is known and can be taken into account in subsequent operations following the quantum Fourier transform.

The generic TQGs referred to above are generally controlled-phase gates $R_m$, which can be represented by the matrix

$$R_m = \begin{pmatrix} 1 & 0 \\ 0 & e^{2\pi i/2^m} \end{pmatrix}$$

where $m = c - t + 1$, c is the number of the control qubit $q_c$ and t is the number of the target qubit $q_t$ for qubit numbering starting from $q_0$. The number m depends on the initial numbering of the qubit, so it is essential to track the movement of the qubit numberings due to the SWAP operations.

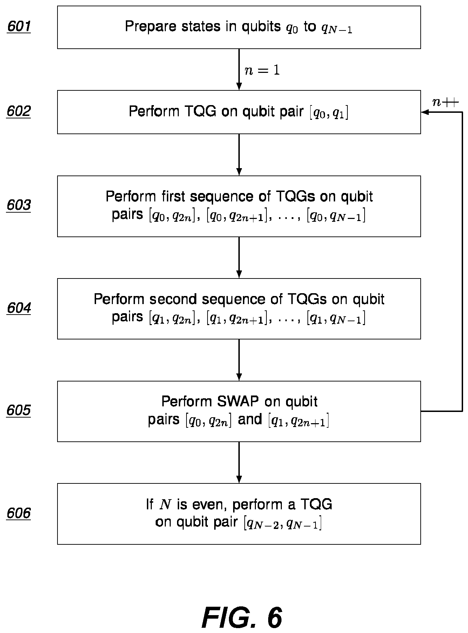

Figure 6 is a flow chart showing the method of performing a quantum Fourier transform on a quantum processing until with a topology in line with that of Figure 4, with $N$ qubits, including $N - 2$ central qubits, each of which is directly connected to a first qubit $q_0$ and a second qubit $q_1$. The first and second qubits are also directly connected together. The method of Figure 6 is performed on quantum computer, although a classical computer may also be used in order to provide the correct signals and control sequences to the qubits and other components of the quantum computer in order to perform the quantum gates. The method may therefore also be performed in a hybrid classical-quantum computer system.

At step 601, initial quantum states are prepared in the qubits $q_0$ to $q_{N-1}$. Preparing the initial quantum states may comprise preparing $|0\rangle$ states in each qubit and manipulating the qubit states by the application of quantum gates, such as Pauli $X$, $Y$ and $Z$ gates and the Hadamard gate $H$. Alternatively, preparing the initial quantum states may comprise performing another quantum computation algorithm such that the resulting quantum states of the previous quantum algorithm are stored in the qubits $q_0$ to $q_{N-1}$. The qubits $q_0$ to $q_{N-1}$ may therefore be part of a larger QPU containing other qubits that are used to perform other algorithms of which the QFT is a component.

At step 602, a first TQG is performed on the first qubit $q_0$ and the second qubit $q_1$, denoted as the pair $[q_0, q_1]$.

At step 603, a first sequence of TQGs is performed on qubit pairs $[q_0, q_{2n}]$, $[q_0, q_{2n+1}]$, and so on, incrementing the index of the second qubit in the pair by one for each pair until the final pair $[q_0, q_{N-1}]$ is reached and a TQG is performed on the final pair too. Every TQG in the first sequence acts on the first qubit $q_0$ and one of the central qubits $q_2$ to $q_{N-1}$. The number n which appears in the qubit indices is set at 1 for the first iteration of steps 602 to 605.

At step 604, a second sequence of TQGs is performed, the second sequence acting on qubit pairs $[q_1, q_{2n}]$, $[q_1, q_{2n13}]$, ..., $[q_1, q_{N-1}]$. Every TQG in the second sequence acts on the second qubit $q_1$ and one of the central qubits $q_2$ to $q_{N-1}$.

As explained above, steps 603 and 604 may be performed partially in parallel. After the first TQG of the first sequence has been performed on qubit pair $[q_0, q_{2n}]$, the remaining TQGs of the first sequence may be performed in parallel with TQGs of the second sequence. Once all of the TQGs of the first sequence have been performed, the final TQG of the second sequence, which acts on qubit pair $[q_1, q_{N-1}]$, is performed.

At step 605, a SWAP gate is performed on qubit pairs $[q_0, q_{2n}]$ and $[q_1, q_{2n+1}]$.

Steps 602 to 605 are repeated as long as the number n, which is incremented with every iteration of steps 602 to 605, is less than or equal to $N$ - 1/2.

Once all iterations of steps 602 to 605 are complete, a final TQG is performed on qubit pair $[q_{N-2}, q_{N-1}]$, if N is even.

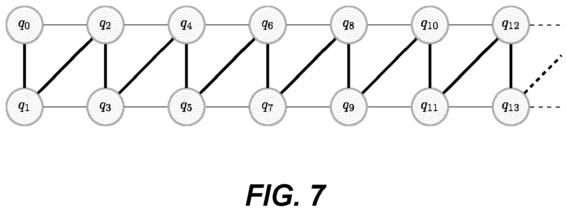

Figure 7 shows a quantum processing unit employing a four-degree chain topology. According to the four-degree chain topology, all qubits except for the first qubit, second qubit, penultimate and final qubits in the chain are connected to four other qubits. Put another way, the quantum processing unit has $N$ qubits $q_0$ to $q_{N-1}$, of which all qubits $q_k$ except for the first qubit $q_0$, second qubit $q_1$, penultimate qubit $q_{N-2}$ and final qubit $q_{N-1}$ are connected to four other qubits $q_{k-2}$, $q_{k-1}$, $q_{k+1}$ and $q_{k+2}$.

The first qubit $q_0$ is connected to qubit $q_1$ and $q_2$, the second qubit $q_1$ is connected to qubits $q_0$, $q_2$ and $q_3$. In Figure 7, the penultimate qubit $q_{12}$ is connected to qubits $q_{10}$, $q_{11}$ and $q_{13}$, and the final qubit $q_{13}$ is connected to qubit $q_{11}$ and $q_{12}$. More generally, for a chain of $N$ qubits, the penultimate qubit $q_{N-2}$ is connected to qubits $q_{N-4}$, $q_{N-3}$ and $q_{N-1}$ and the final qubit in the chain $q_{N-1}$ is connected to qubits $q_{11}$ and $q_{12}$.

The connections of the chain can be classified according to the pairs of qubits that they connect. A first set, shown in Figure 7 and vertical and diagonal lines, connect consecutively numbered qubits, i.e. $q_k$ and $q_{k+1}$. A second set, shown as the upper horizontal connections in Figure 7, join pairs of consecutive even-numbered qubits, i.e. $q_k$ and $q_{k+2}$ where k is zero or even. A third set, shown as the lower horizontal connections in Figure 7, join pairs of consecutive odd-numbered qubits, i.e. $q_k$ and $q_{k+2}$ where k is odd.

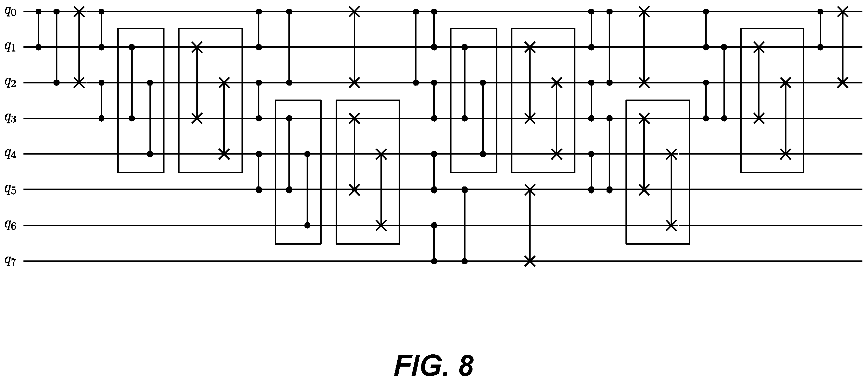

Figure 8 is a quantum circuit diagram showing the arrangement of TQGs of a quantum Fourier transform performed on the quantum processing unit of Figure 7. TQGs are indicated by connections between quantum wires for qubits $q_0$ to $q_7$. TQGs surrounded by a box with a solid border can be performed in parallel. In conventional quantum circuit diagrams a connection with a quantum wire indicated with a filled circle typically denotes a control connection, but in the diagram of Figure 8 no such meaning is intended. The filled circle is merely used to indicate which quantum wires the TQGs interact with.

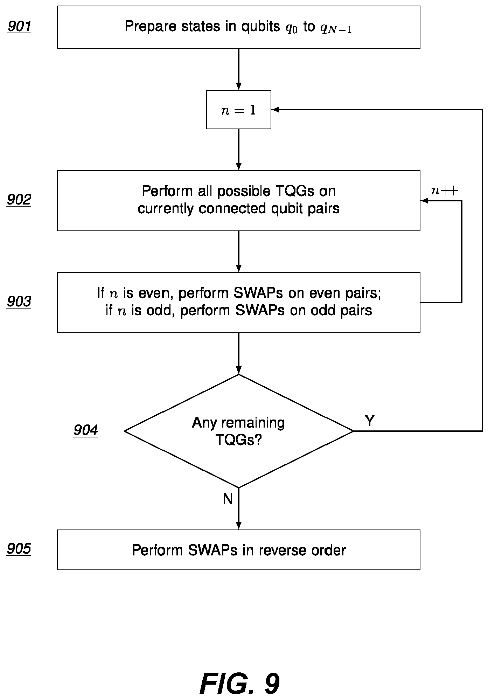

A generalized method for performing a quantum Fourier transform on a QPU with any number of qubits $q_0$ to $q_{N-1}$ with a topology consistent with the four-degree chain shown in Figure 7 is depicted in Figure 9.

Figure 9 is a flow chart showing the method of performing a quantum Fourier transform on a quantum processing until with a topology in line with that of Figure 7, with $N$ qubits, including $N$ - 2 central qubits, each of which is directly connected to a first qubit $q_0$ and a second qubit $q_1$. The first and second qubits are also directly connected together. The method of Figure 9 is performed on quantum computer, although a classical computer may also be used in order to provide the correct signals and control sequences to the qubits and other components of the quantum computer in order to perform the quantum gates. The method may therefore also be performed in a hybrid classical-quantum computer system.

At step 901, initial quantum states are prepared in the qubits $q_0$ to $q_{N-1}$. Preparing the initial quantum states may comprise preparing $|0\rangle$ states in each qubit and manipulating the qubit states by the application of quantum gates, such as Pauli $X$, $Y$ and $Z$ gates and the Hadamard gate $H$. Alternatively, preparing the initial quantum states may comprise performing another quantum computation algorithm such that the resulting quantum states of the previous quantum algorithm are stored in the qubits $q_0$ to $q_{N-1}$. The qubits $q_0$ to $q_{N-1}$ may therefore be part of a larger QPU containing other qubits that are used to perform other algorithms of which the QFT is a component.

At step 902, all of the TQGs that it is possible to perform based on the current locations of qubit states within the connected qubit pairs are performed and the order in which TQGs must be performed in a quantum Fourier transform.

The order in which TQGs must be performed may be a sequence of individual TQGs, or may be a sequence of groups of one or more TQGs that can be performed in parallel, in which case "performing all TQGs that can be performed" includes performing all groups from the sequence that can be fully performed based on the current positions of the qubit states within the qubits.

The order in which TQGs must be performed can be seen from, for example, Figure 2. Where the order is a sequence of single TQGs, multiple such sequences are essentially equivalent since many gates can be performed in parallel. In this case, some of the TQGs that can be performed in parallel may be possible based on the current positions of qubit states within the qubits and others may not, in which case those that are possible may be performed at step 902. For example, TQGs on qubit pairs $[q_0,q_1]$, $[q_0,q_2]$ and $[q_1,q_2]$ can be performed based on the current positions of the qubit states; however, the TQG on qubit pair $[q_0,q_3]$ can be performed in parallel with the TQG on qubit pair $[q_1,q_2]$ according to the order strictly required in a quantum Fourier transform, but cannot be performed based on the current positions of qubit states within the qubits before any SWAPs are performed.

Where the order is a sequence of groups of TQGs that can be performed in parallel, the TQGs in the group are performed only when all of the TQGs in the group can be performed at the same time. For example, the TQGs on pairs $[q_0,q_3]$ and $[q_1,q_2]$ are in the same group in the sequence because they can be performed in parallel, thus even though the TQG on $[q_1,q_2]$ can be performed before the first SWAP, it is not performed until after, where it can be performed in parallel with the TQG on $[q_0,q_3]$.

As an illustrative example, for a system of 8 qubits as depicted in Figure 8, the TQGs that can be performed in parallel can be arranged into a table as follows, where each row represents one of the group of TQGs that can be performed in parallel:

| | $q_0$ | $q_1$ | $q_2$ | $q_3$ | $q_4$ | $q_5$ | $q_6$ |
|---|---|---|---|---|---|---|---|
| **Group 1** | $q_0,q_1$ | | | | | | |
| **Group 2** | $q_0,q_2$ | | | | | | |
| **Group 3** | $q_0,q_3$ | $q_1,q_2$ | | | | | |
| **Group 4** | $q_0,q_4$ | $q_1,q_3$ | | | | | |
| **Group 5** | $q_0,q_5$ | $q_1,q_4$ | $q_2,q_3$ | | | | |
| **Group 6** | $q_0,q_6$ | $q_1,q_5$ | $q_2,q_4$ | | | | |
| **Group 7** | $q_0,q_7$ | $q_1,q_6$ | $q_2,q_5$ | $q_3,q_4$ | | | |
| **Group 8** | | $q_1,q_7$ | $q_2,q_6$ | $q_3,q_5$ | | | |
| **Group 9** | | | $q_2,q_7$ | $q_3,q_6$ | $q_4,q_5$ | | |
| **Group 10** | | | | $q_3,q_7$ | $q_4,q_6$ | | |
| **Group 11** | | | | | $q_4,q_7$ | $q_5,q_6$ | |
| **Group 12** | | | | | | $q_5,q_7$ | |
| **Group 13** | | | | | | | $q_6,q_7$ |

At step 903, after all of the possible TQGs have been performed, if n is even SWAP gates are performed between all pairs of qubits $[q_c,q_{c+2}]$, where c is even, c/2 is even and c/2 ≤ n. If n is odd, SWAP gates are performed between all pairs of qubits $[q_d,q_{d+2}]$, where d is odd, (d + 1)/2 is even, and (d + 1)/2 ≤ n. For the first iteration of steps 902 and 903, n = 1.

Following each SWAP, the qubit states associated with each qubit before the SWAP are swapped and it may be possible to perform further TQGs based on the new locations of the qubit states within the qubits and the connections available between the qubits.

After each iteration of step 903, n is incremented by 1 and steps 902 and 903 are repeated until n is equal to the ceiling of (N - 1)/2, where *N* is the number of qubits, i.e. if the result of (N - 1)/2 is not a whole number, it is rounded up to the nearest whole number greater than (N - 1)/2.

After steps 902 and 903 have been repeated until n = [(*N* - 1)/2], there may still be some TQGs that need to be performed. If so, at step 904 the process returns to step 902 and 903, with n = 1, and the iterative application of steps 902 and 903 described above repeats. If, on any loop, all of the TQGs are performed before n reaches [(*N* - 1)/2], the process may move on to step 905.

At an optional step 905, all of the SWAPs performed in the iterations of step 903 may be performed in reverse order, such that the locations of the qubit states within the qubits are restored to their "correct" locations, i.e. the locations that those states would be expected in the idealised ATA topology system with no SWAPs.

**Claims**

1. A quantum processing unit for performing a quantum Fourier transform, the quantum processing unit comprising:

   - a first qubit, $q_0$;
   - a second qubit, $q_1$, connected directly to the first qubit;
   - a plurality of central qubits, $q_2$ to $q_{N-1}$, where *N* is the total number of qubits including the first qubit and the second qubit and the plurality of central qubits, each central qubit being connected directly to the first qubit and to the second qubit.

2. The quantum processing unit of claim 1, wherein the first qubit, second qubit and plurality of central qubits are logical qubits that each comprise one or more physical qubits.

3. A method for performing a quantum Fourier transform on the quantum processing unit of claim 1 or 2, the method comprising:

   d) initializing the qubit states of the first qubit $q_0$, second qubit $q_1$ and central qubits $q_2 ... q_{N-1}$;
   e) performing the following for every value of n in the sequence 1,2,..., $[(N - 1)/2]$:

   - performing a two-qubit gate (TQG) on the qubit pair $[q_0, q_1]$;
   - performing a first sequence of TQGs acting on qubit pairs $[q_0, q_{2n}]$ $[q_0, q_{2n+1}]$, ..., $[q_0, q_{N-1}]$ and a second sequence of TQGs acting on qubit pairs $[q_1, q_{2n}]$, $[q_1, q_{2n+2}]$, ..., $[q_1, q_{N-1}]$; and
   - performing swap gates on qubit pairs $[q_0, q_{2n}]$ and $[q_1, q_{2n+1}]$;

   f) If $N$ is even, performing a TQG on the qubit pair $[q_{N-2}, q_{N-1}]$.

4. The method of claim 3, wherein the first sequence of TQGs and a second sequence of TQGs are performed such that after performing a TQG on the qubit pair $[q_0, q_{2n}]$ in the first sequence, the remaining TQGs of the first sequence are performed in parallel with TQGs of the second sequence such that the TQG on qubit pair $[q_0, q_k]$ is performed in parallel with the TQG on qubit pair $[q_1, q_{k-1}]$.

5. The method of claim 4, wherein after performing the remaining TQGs of the first sequence in parallel with TQGs of the second sequence, the final TQG in the second sequence, which operates on qubit pair $[q_1, q_{N-1}]$, is performed.

6. The method of claim 4 or 5, wherein performing TQGs comprises applying control signals to the qubits and/or to the connections between the qubits.

7. A quantum processing unit for performing a quantum Fourier transform, the quantum processing unit comprising $N$ qubits $q_0$ to $q_{N-1}$, wherein the qubits are arranged in a four-degree chain such that all qubits $q_k$ except for the first qubit $q_0$, second qubit $q_1$, penultimate qubit $q_{N-2}$ and final qubit $q_{N-1}$ are connected to four other qubits $q_{k-2}$, $q_{k-1}$, $q_{k+1}$ and $q_{k+2}$.

8. The quantum processing unit of claim 7 comprising at least five qubits.

9. The quantum processing unit of claim 7 or 8, wherein:

   - the first qubit $q_0$ is connected to qubits $q_1$ and $q_2$;
   - the second qubit $q_1$ is connected to qubits $q_0$, $q_2$ and $q_3$;
   - the penultimate qubit $q_{N-2}$ is connected to qubits $q_{N-4}$, $q_{N-3}$ and $q_{N-1}$; and
   - the final qubit $q_{N-1}$ is connected to qubits $q_{N-3}$ and $q_{N-2}$.

10. The quantum processing unit of any of claims 7 to 9, wherein the qubits $q_0$ to $q_{N-1}$ are logical qubits that each comprise one or more physical qubits.

11. A method for performing a quantum Fourier transform on the quantum processing unit of any of claims 7 to 10, the method comprising:

    d) initializing the qubit states of the first qubits $q_0$ to $q_{N-1}$;
    e) performing the following for every value of n in the sequence 1,2,..., $[(N - 1)/2]$:

    - performing all TQGs that can be performed on the qubits $q_0$ to $q_{N-1}$ based on the current positions of the qubit states within the qubits $q_0$ to $q_{N-1}$ and the connections available between the qubits, and based on the order in which TQGs must be performed in a quantum Fourier transform;
    - if n is even, performing SWAP gates between all pairs of qubits $[q_c, q_{c+2}]$, where c is even, c/2 is even and c/2 ≤ n; and
    - if n is odd, performing SWAP gates between all pairs of qubits $[q_d, q_{d+2}]$, where d is odd, (d + 1)/2 is even, and (d + 1)/2 ≤ n;

    f) repeating b) until all TQGs required for the quantum Fourier transform have been performed.

12. The method of claim 11, wherein once all TQGs required for the quantum Fourier transform have been performed, the method further comprises applying a plurality of SWAP gates to the qubits $q_0$ to $q_N$ corresponding to SWAP gates applied during the process of applying the TQGs in inverse order.

13. The method of claim 11 or 12, wherein performing TQGs comprises applying control signals to the qubits and/or to the connections between the qubits.

14. The method of any of claims 11 to 13, wherein the order in which TQGs must be performed in a quantum Fourier transform comprises a sequence of groups of one or more TQGs that can be performed in parallel, and wherein performing all TQGs that can be performed comprises performing all groups of one or more TQGs from the sequence that can be fully performed based on the current positions of the qubit states within the qubits.

15. A computer system configured to perform the method of any of claims 3 to 6 or 11 to 14.

16. A computer system comprising a classical processing unit and a quantum processing unit, the classical processing unit being configured to provide control signals to the quantum processing unit such that the quantum processing unit performs the method of any of claims 3to 6 or 11 to 14.

17. A quantum processing unit configured to perform the method of any of claims 3 to 6 or 11 to 14.

18. A computer program product comprising instructions which, when executed by a computer, cause the computer to perform the method of any of claims 3 to 6 or 11 to 14.

19. A computer-readable medium comprising instructions which, when executed by a computer, cause the computer to perform the method of any of claims 3 to 6 or 11 to 14.

*FIG. 1*

FIG. 2

*FIG. 3*

FIG. 4

Blocks 0 & 1

$q_0$ $q_1$ $q_2$ $q_3$ $q_4$ $q_5$ $q_6$ $q_7$

Blocks 2 & 3

Blocks 4 & 5

Block 6

*FIG. 5*

601    Prepare states in qubits $q_0$ to $q_{N-1}$

$n = 1$

602    Perform TQG on qubit pair $[q_0, q_1]$

$n{+}{+}$

603    Perform first sequence of TQGs on qubit pairs $[q_0, q_{2n}]$, $[q_0, q_{2n+1}]$, $\ldots$, $[q_0, q_{N-1}]$

604    Perform second sequence of TQGs on qubit pairs $[q_1, q_{2n}]$, $[q_1, q_{2n+1}]$, $\ldots$, $[q_1, q_{N-1}]$

605    Perform SWAP on qubit pairs $[q_0, q_{2n}]$ and $[q_1, q_{2n+1}]$

606    If $N$ is even, perform a TQG on qubit pair $[q_{N-2}, q_{N-1}]$

## FIG. 6

**FIG. 7**

*FIG. 8*

| 901 | Prepare states in qubits $q_0$ to $q_{N-1}$ |

$n = 1$

| 902 | Perform all possible TQGs on currently connected qubit pairs |

$n{+}{+}$

| 903 | If $n$ is even, perform SWAPs on even pairs; if $n$ is odd, perform SWAPs on odd pairs |

904 — Any remaining TQGs? — Y

N

| 905 | Perform SWAPs in reverse order |

## FIG. 9

# EP 4 246 384 A1

Europäisches
Patentamt

European
Patent Office

Office européen
des brevets

## EUROPEAN SEARCH REPORT

**Application Number**

EP 22 16 1856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MANUEL G ALGABA ET AL: "Co-Design quantum simulation of nanoscale NMR", ARXIV.ORG, CORNELL UNIVERSITY LIBRARY, 201 OLIN LIBRARY CORNELL UNIVERSITY ITHACA, NY 14853, 11 February 2022 (2022-02-11), XP091159090, | 1-6, 15-19 | INV. G06N10/60 G06N10/20 |
| A | * abstract * * page 1, left-hand column, line 1 - page 19, line 2 * | 7-14 | |
| A | Parthasarathy K R: "Lectures on Quantum Computation, Quantum Error Correcting Codes and Information Theory", , 1 June 2021 (2021-06-01), pages 1-132, XP055951851, Retrieved from the Internet: URL:https://static.cse.iitk.ac.in/users/ppk/notes/krp.pdf [retrieved on 2022-08-16] * abstract * * page 29, line 1 - page 48, last line * | 1-19 | |
| A | ADAM HOLMES ET AL: "Impact of qubit connectivity on quantum algorithm performance", ARXIV.ORG, CORNELL UNIVERSITY LIBRARY, 201 OLIN LIBRARY CORNELL UNIVERSITY ITHACA, NY 14853, 6 November 2018 (2018-11-06), XP081641239, DOI: 10.1088/2058-9565/AB73E0 * abstract * * page 1, left-hand column, line 1 - page 17, last line * | 1-19 | |

**TECHNICAL FIELDS SEARCHED (IPC)**

G06N

-/--

The present search report has been drawn up for all claims

| Place of search | Date of completion of the search | Examiner |
|---|---|---|
| The Hague | 28 September 2022 | Totir, Felix |

page 1 of 2

# EUROPEAN SEARCH REPORT

Application Number

EP 22 16 1856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI GUSHU ET AL: "Towards Efficient Superconducting Quantum Processor Architecture Design", PROCEEDINGS OF THE TWENTY-FIFTH INTERNATIONAL CONFERENCE ON ARCHITECTURAL SUPPORT FOR PROGRAMMING LANGUAGES AND OPERATING SYSTEMS, [Online] 28 November 2019 (2019-11-28), pages 1-15, XP055951623, New York, NY, USA DOI: 10.1145/3373376.3378500 ISBN: 978-1-4503-7102-5 Retrieved from the Internet: URL:https://arxiv.org/pdf/1911.12879.pdf> [retrieved on 2022-09-26] | 7-19 | |
| A | * abstract * * page 1, left-hand column, line 1 – page 13, left-hand column, last line * ----- | 1-6 | |
| A | US 2021/192380 A1 (JIN LIJING [CN] ET AL) 24 June 2021 (2021-06-24) * abstract; claims 1-20; figures 1-5 * * paragraph [0002] – paragraph [0038] * * paragraph [0049] – paragraph [0102] * ----- | 1-19 | TECHNICAL FIELDS SEARCHED (IPC) |
| A | WO 02/065393 A2 (DWAVE SYS INC [CA]; BLAIS ALEXANDRE [CA]) 22 August 2002 (2002-08-22) * abstract; figures 1-8 * * page 1, line 1 – page 3, line 10 * * page 3, line 29 – page 13, last line * ----- | 1-19 | |

The present search report has been drawn up for all claims

| Place of search | Date of completion of the search | Examiner |
|---|---|---|
| The Hague | 28 September 2022 | Totir, Felix |

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-6(completely); 15-19(partially)

   Star-connected quantum processing unit and method for performing quantum Fourier transform on said unit
   ---

2. claims: 7-14(completely); 15-19(partially)

   Four-degree chain connected quantum processing unit and method for performing quantum Fourier transform on said unit
   ---

## ANNEX TO THE EUROPEAN SEARCH REPORT
## ON EUROPEAN PATENT APPLICATION NO.

EP 22 16 1856

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2022

| Patent document cited in search report | | Publication date | Patent family member(s) | | Publication date |
|---|---|---|---|---|---|
| US 2021192380 | A1 | 24-06-2021 | AU 2020230228 | A1 | 08-07-2021 |
| | | | CN 111091195 | A | 01-05-2020 |
| | | | JP 2021103510 | A | 15-07-2021 |
| | | | US 2021192380 | A1 | 24-06-2021 |
| WO 02065393 | A2 | 22-08-2002 | CA 2438313 | A1 | 22-08-2002 |
| | | | EP 1360646 | A2 | 12-11-2003 |
| | | | JP 2004531793 | A | 14-10-2004 |
| | | | US 2003164490 | A1 | 04-09-2003 |
| | | | WO 02065393 | A2 | 22-08-2002 |

EPO FORM P0459

For more details about this annex : see Official Journal of the European Patent Office, No. 12/82